# FASCICULE DE BREVET EUROPEEN

(11) **EP 1 220 003 B1**
(45) Date de publication et mention de la délivrance du brevet: **07.01.2004**
(21) Numéro de dépôt: 01402992.0
(22) Date de dépôt: 22.11.2001
(51) Int. Cl.: G02B 17/08, G02B 23/06

(54) **Architecture optique de téléscope d'observation**
Optische Architektur für Beobachtungsteleskop
Optical architecture for observation telescope

(30) Priorité: 22.12.2000 FR 0016938
(43) Date de publication de la demande: 03.07.2002
(73) Titulaire: ALCATEL, 75008 Paris (FR)
(72) Inventeur: Cerrutti-Maori, Guy Henry Abel, 06150 Cannes La Bocca (FR); Viard, Thierry, 06210 Mandelieu (FR)
(74) Mandataire: Smith, Bradford Lee

(56) Documents cités:
- EP-A- 0 565 355
- GB-A- 1 322 333
- GB-A- 2 283 107
- US-A- 3 667 827
- US-A- 5 379 157
- US-A- 5 907 442

## Description

L'invention concerne une architecture optique de télescope d'observation à grand champ et en particulier un télescope destiné à être installé à bord d'un véhicule. Ce véhicule est par exemple un satellite spatial exploitant le télescope à des fins d'observation zonale terrestre, comme prévu par exemple par le programme d'observation SPOT.

Comme il est connu, les exigences, en matière d'observation depuis un satellite, qui sont actuellement demandées, impliquent par exemple une résolution spatiale d'observation sur une zone de quelques mètres, prise au niveau d'un champ de l'ordre de quarante à soixante kilomètres. Il est par ailleurs souhaité que le télescope n'ait pas d'obturation centrale, une telle obturation étant présente, comme il est connu avec certaines architectures de télescope.

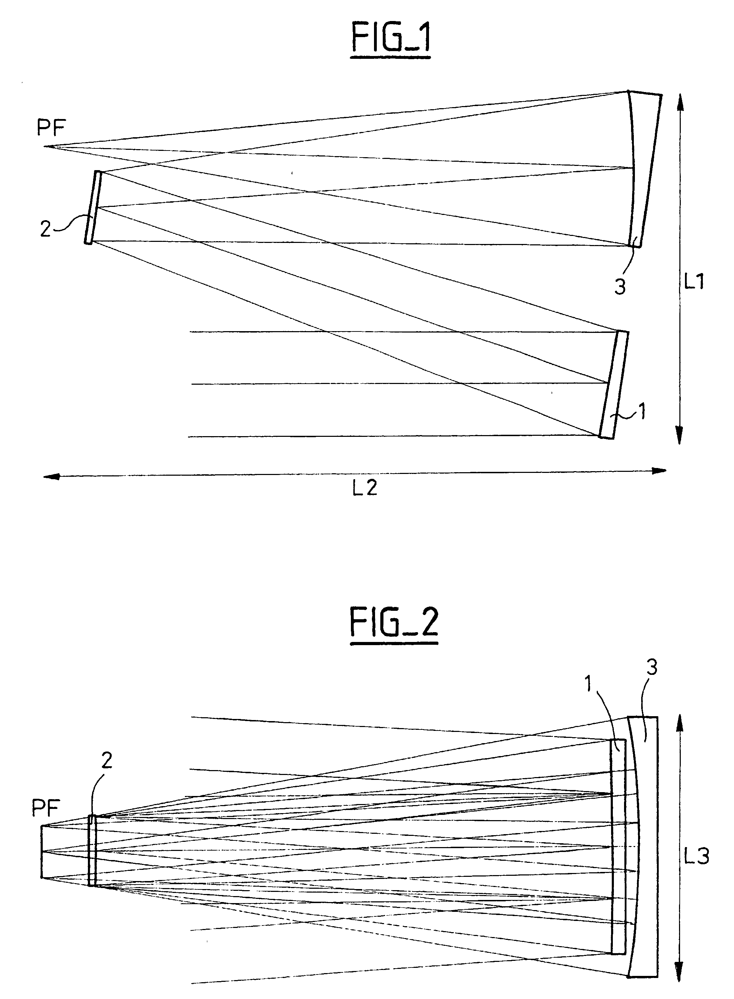

Ces exigences en matière d'observation et d'absence d'obturation sont susceptibles d'être respectées par les télescopes anastigmates à trois miroirs, classiquement désignés par l'acronyme TMA (pour "three mirrors anastigmat). Une architecture optique connue et appropriée de télescope anastigmate à trois miroirs est illustrée sur les figures 1 et 2. Ce télescope comporte un premier miroir 1, asphérique, concave et taillé hors axe, c'est-à-dire sans symétrie de révolution, qui réfléchit le faisceau de manière qu'il converge légèrement vers un second miroir 2, comme on le voit sur les figures 1 et 2. Ce miroir 2 est asphérique, convexe et taillé hors axe, sauf si la pupille du télescope est située à son niveau, il est alors obtenu à partir d'une forme déformée de sphère. Le faisceau qu'il reçoit est renvoyé sous la forme d'un faisceau divergent, vers un troisième miroir 3 comme le montre également les deux figures évoquées ci-dessus. Ce miroir 3 est asphérique, concave et taillé hors axe. Il reçoit le faisceau divergent réfléchi par le miroir 2 qu'il focalise au niveau d'un plan focal PF désaxé. L'ensemble formé par les trois miroirs 1, 2 et 3 constitue un système optique anastigmatique de formation d'image, dans lequel le champ d'image est désaxé. Un tel système est encombrant avec, par exemple, des dimensions L1, L2 et L3, telles qu'illustrées sur les figures 1 et 2, qui sont respectivement égales à 550 mm, 900 mm et 400 mm, pour un télescope à pupille de 160 mm et focale de 610 mm.

Un tel télescope TMA a plusieurs inconvénients, il implique la réalisation d'au moins deux miroirs asphériques concaves, taillés hors d'axe, qui sont coûteux, dans la mesure où ils ont une forme allongé et sont longs et délicats à réaliser. L'ensemble obtenu est lourd ce qui est inconvénient certain pour un équipement destiné à être embarqué dans un satellite spatial. De plus l'architecture optique définie pour le télescope est sensible aux excentrements.

Le document US5907442 décrit une architecture optique de télescope d'observation avec un miroir concave et hors axe et un correcteur d'ouverture dioptrique et achromatique.

Le document GB1322333 décrit un télescope avec un miroir concave et deux correcteurs dioptriques.

L'invention propose donc une architecture optique de télescope d'observation et en particulier une architecture pour télescope à grand champ. Une telle architecture est avantageusement prévue pour être embarquée à bord d'un véhicule et en particulier à bord d'un satellite spatial à des fins d'observation zonale terrestre.

Selon une caractéristique de l'invention, cette architecture optique de télescope comporte :
- un miroir, asphérique ou éventuellement sphérique, concave et hors axe, qui réfléchit de manière convergente le faisceau constitué par le rayonnement qu'il reçoit d'une zone terrestre qu'il observe ;
- un correcteur d'ouverture, dioptrique et achromatique, inséré sur le trajet du faisceau convergent réfléchi par le miroir ;
- un correcteur de champ, dioptrique et achromatique, inséré sur le trajet du faisceau convergent réfléchi par le miroir, en aval du correcteur d'ouverture par rapport à ce miroir.
- une pupille positionnée sur le trajet du faisceau convergent réfléchi, de manière à permettre d'obtenir un champ de vue hors axe optique évitant la présence d'une obturation centrale.

Selon une variante de l'invention, l'architecture optique de télescope comporte :
- un miroir, asphérique ou éventuellement sphérique, concave et hors axe qui permet de prendre deux images avec une séparation angulaire déterminée et qui réfléchit de manière convergente chacun des deux faisceaux constitués par les rayonnements qu'il reçoit d'une zone terrestre qu'il observe ;
- un correcteur d'ouverture, dioptrique et achromatique, inséré sur le trajet des faisceaux convergents réfléchis par le miroir ;
- un correcteur de champ dioptrique et achromatique, inséré sur le trajet des faisceaux convergents réfléchis par le miroir, en aval du correcteur d'ouverture par rapport à ce miroir.
- une pupille positionnée sur le trajet des faisceaux convergents réfléchis, de manière que deux champs de vue soient obtenus en évitant une obturation centrale, ladite pupille étant agencée pour laisser passer simultanément les deux directions de visée correspondant chacune à l'un des faisceaux réfléchis.

Selon une forme de réalisation commune aux deux architectures selon l'invention, la pupille est placée sur la face du correcteur d'ouverture qui reçoit le ou les faisceau(x) convergent(s) réfléchi(s) par le miroir.

Le correcteur d'ouverture et le correcteur de champ sont des correcteurs achromatiques, sans puissance ou quasiment sans puissance.

Le correcteur d'ouverture et le correcteur de champ sont respectivement constitués chacun de lentilles d'au moins deux types de verre différents.

Le choix des indices des verres d'au moins un des correcteurs peut être exploité pour prendre en compte les variations occasionnées par la température.

Selon une forme de réalisation de l'invention, il est aussi prévu un mécanisme de refocalisation agissant sur les lentilles du correcteur de champ.

Selon une forme de réalisation de l'invention, il est prévu un auxiliaire intervenant au niveau du faisceau, tel qu'un éclateur spectral, à prismes dichroïques et divolis, permettant de le partager spectralement, un dérotateur d'image, ou une lame séparatrice permettant de diviser le faisceau pour obtenir des images dans des plans focaux différents.

L'invention, ses caractéristiques et ses avantages sont précisés dans la description qui suit en liaison avec les figures évoquées ci-dessous.

Les figures 1 et 2 correspondent respectivement à une vue selon un plan YZ et à une vue selon un plan XZ du télescope TMA, connu, succinctement évoqué ci-dessus.

Les figures 3 et 4 correspondent respectivement à une vue selon un plan YZ et à une vue selon un plan XZ du télescope, selon l'invention.

La figure 5 est une vue relative à une variante de réalisation du télescope selon l'invention pour application stéréo.

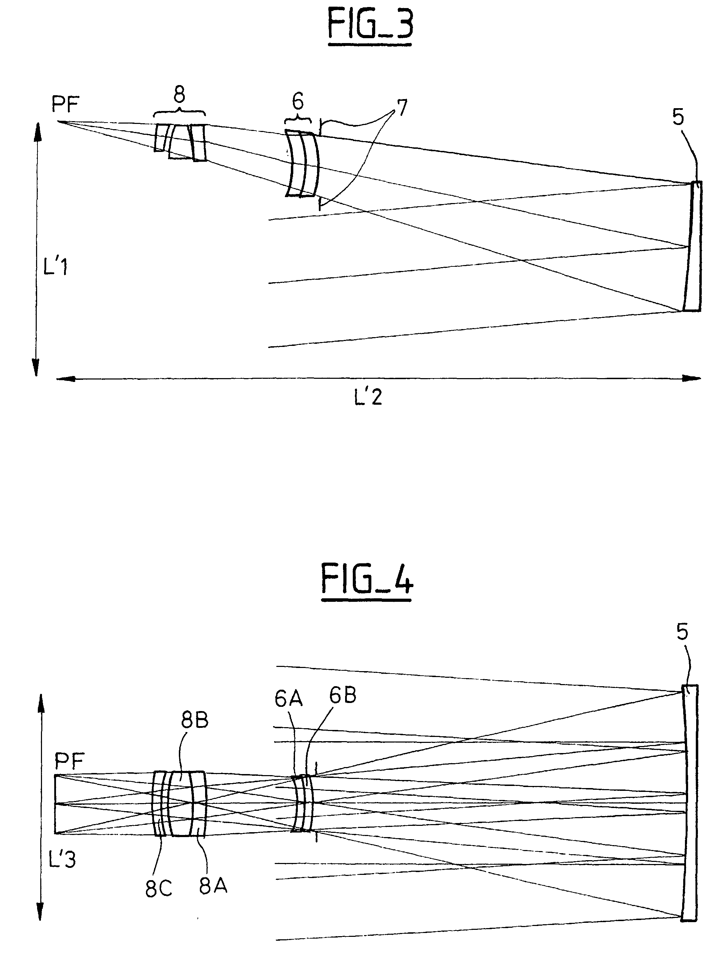

L'architecture optique de télescope d'observation illustrée sur les figures 3 et 4 est destinée à être substituée à celle présentée sur les figures 1 et 2.

A cet effet, le télescope selon l'invention comporte un premier miroir 5, asphérique ou éventuellement sphérique, concave et hors axe qui réfléchit de manière convergente le faisceau constitué par le rayonnement qu'il reçoit d'une zone terrestre qu'il observe. Le deuxième et le troisième miroir d'un télescope TMA sont ici remplacés par des correcteurs dioptriques qui sont corrigés des aberrations chromatiques. A cet effet, un correcteur d'ouverture 6, dioptrique et achromatique, qui est sans puissance ou quasiment sans puissance, est inséré sur le trajet du faisceau convergent réfléchi par le miroir 5. Ce correcteur est constitué d'au moins deux lentilles 6A, 6B, constituées de types de verre différents, pour corriger le chromatisme. Des verres, tels que ceux référencés FK52 et LaK8 de la société SCHOTT, peuvent par exemple être utilisés. La pupille 7 du télescope est préférablement placée sur la face avant du correcteur d'ouverture 6 qui reçoit le faisceau convergent réfléchi par le miroir 5. La présence d'une obturation centrale est évitée par un choix judicieux de la direction de visée ou autrement dit du champ de vue.

Un correcteur de champ 8, dioptrique et achromatique, sans puissance ou quasiment sans puissance, est inséré sur le trajet du faisceau convergent réfléchi par le miroir 5, en aval du correcteur d'ouverture 7 par rapport à ce miroir 5. Ce correcteur de champ 8 est lui aussi constitué de lentilles d'au moins deux types de verre pour corriger le chromatisme, trois lentilles 8A, 8B, 8C, supposées constituées de types de verre différents, étant présentées sur les deux figures 3 et 4. Le choix des indices respectifs des verres peut être exploité pour permettre de prendre en compte les variations occasionnées par la température.

L'architecture optique réalisée présente l'avantage de permettre une implantation aisée d'un miroir de changement de visée. Elle a aussi pour avantage de faciliter l'alignement des éléments constitutifs du télescope que constituent le miroir et les correcteurs. Elle permet la refocalisation de manière simple, au moyen d'un mécanisme permettant de déplacer les lentilles du correcteur de champ. L'alignement est facilité par le fait que le télescope dispose d'un axe commun

Elle permet également l'utilisation d'auxiliaires permettant d'intervenir au niveau du faisceau, selon les applications visées et par exemple d'associer au télescope un éclateur spectral, un dérotateur, une lame séparatrice...

L'éclateur spectral est par exemple un éclateur à prismes dichroïques et diviseurs optiques en ligne, ou divolis, qui permet de diviser un faisceau reçu par domaines spectraux. Le dérotateur permet une rotation d'image par exemple pour que les images successivement obtenues au cours d'un déplacement et donc en particulier d'un déplacement en orbite, soient maintenues dans une même direction tenant compte de la vitesse du véhicule portant le télescope. La lame séparatrice est exploitable pour partager le flux qu'elle reçoit par exemple pour obtenir des images dans deux plans focaux différents.

Les dimensions L'1, L'2 et L'3, telles qu'illustrées sur les figures 3 et 4, qui sont susceptibles d'être obtenues pour un télescope à pupille de 160 mm et focale de 610 mm, peuvent être de, respectivement, 300 mm, 800 mm et 300 mm.

Une réduction significative de l'encombrement du télescope est donc obtenue, en particulier latéralement, la masse du télescope est bien entendu plus faible que précédemment, les lentilles mises en oeuvre avec le premier et seul miroir étant bien plus légères que les deux miroirs du télescope TMA auxquelles elles se substituent. La réduction dimensionnelle et la simplification de l'architecture optique est par nature moins génératrice de lumière parasite que celle d'un télescope TMA, de plus, elle facilite la réalisation des baffles de protection contre les signaux parasites. L'architecture optique proposée permet d'obtenir un télescope qui est moins sensible aux excentrements qu'un télescope TMA.

Selon une variante de l'invention, l'architecture optique de télescope décrite ci-dessus peut être exploitée pour permettre l'obtention d'images stéréoscopiques.

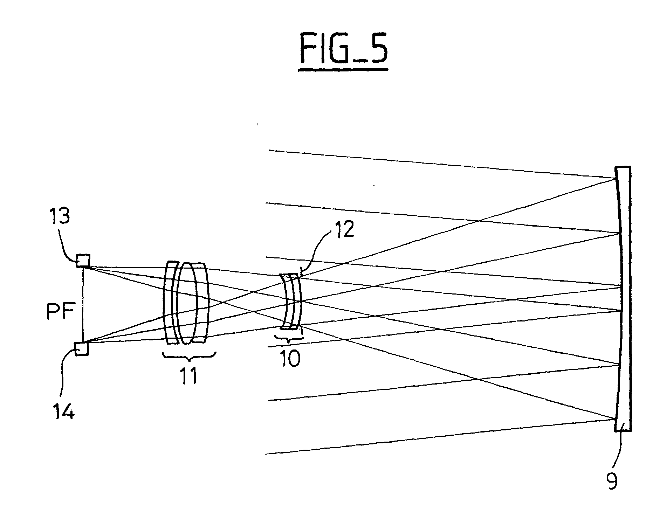

Le télescope, selon cette variante de l'invention, comporte alors un miroir 9, asphérique ou éventuellement sphérique, concave et hors axe, dont la forme se rapproche de celle d'un ellipse allongée, permettant de prendre deux images avec une séparation angulaire déterminée, par exemple de l'ordre de dix degrés, qui est adaptée à la mission à réaliser. Un correcteur d'ouverture 10 et un correcteur de champ 11 sont associés au miroir 9. Les deux correcteurs sont des correcteurs dioptriques et achromatiques, composés chacun de lentilles d'au moins deux types de verre. Ces correcteurs sont sans puissance, au moins pratiquement, et leur disposition par rapport au miroir 9 correspond à celle des correcteurs 6 et 8 par rapport au miroir 5 qui a été décrite plus haut. La pupille 12 du télescope est préférablement située placée sur la face avant du correcteur d'ouverture 10 qui reçoit le faisceau convergent réfléchi par le miroir 9, elle présente elle aussi une forme oblongue pour laisser passer simultanément deux directions de visée, comme illustré sur la figure 5. Deux images sont simultanément obtenues par le même télescope, avec une même focale et les mêmes types de défaut pour chacun d'elles, et en conséquence d'avoir un même facteur d'échelle. Le correcteur d'ouverture 10, le correcteur de champ 11 et la pupille 12 sont communs aux deux directions de visée. Deux barrettes ou matrices réceptrices 13 et 14 disposées perpendiculairement au plan de la figure 5 permettent de récupérer les deux images simultanément obtenues dans le plan focal PF.

## Revendications

1. Architecture optique de télescope d'observation, en particulier pour télescope destiné à être installé à bord d'un véhicule, tel qu'un satellite spatial, à des fins d'observation zonale terrestre, l'architecture comportant:
- un miroir (5), asphérique ou éventuellement sphérique, concave et hors axe, qui réfléchit de manière convergente le faisceau constitué par le rayonnement qu'il reçoit d'une zone terrestre qu'il observe ;
- un correcteur d'ouverture (6), dioptrique et achromatique, inséré sur le trajet du faisceau ;
- une pupille (7) positionnée sur le trajet du faisceau de manière à permettre d'obtenir un champ de vue hors axe optique évitant la présence d'une obturation centrale; **caractérisée en ce que**:
- Le correcteur d'ouverture (6) est inséré sur le trajet du faisceau convergent réfléchi par le miroir ;
- La pupille (7) est positionnée sur le trajet du faisceau convergent réfléchi ; et **en ce que** l'architecture optique comporte en outre
- un correcteur de champ (8), dioptrique et achromatique, inséré sur le trajet du faisceau convergent réfléchi par le miroir, en aval du correcteur d'ouverture par rapport à ce miroir.

2. Architecture optique de télescope d'observation, en particulier pour télescope destiné à être installé à bord d'un satellite spatial à des fins d'observation zonale terrestre, l'architecture comportant :
- un miroir (9), asphérique ou éventuellement sphérique, concave et hors axe, qui permet de prendre deux images avec une séparation angulaire déterminée et qui réfléchit de manière convergente chacun des deux faisceaux constitués par les rayonnements qu'il reçoit d'une zone terrestre qu'il observe ;
- un correcteur d'ouverture (10), dioptrique et achromatique, inséré sur le trajet des faisceaux ;
- une pupille (12) positionnée sur le trajet des faisceaux de manière que deux champs de vue soient obtenus en évitant une obturation centrale, ladite pupille étant agencée pour laisser passer simultanément les deux directions de visée correspondant chacune à l'un des faisceaux réfléchis ; **caractérisée en ce que**
- Le correcteur d'ouverture (10) est inséré sur le trajet des faisceaux convergents réfléchis par le miroir ;
- La pupille (12) est positionnée sur le trajet des faisceaux convergents réfléchis ; et **en ce que** l'architecture optique comporte en outre
- un correcteur de champ (11) dioptrique et achromatique, inséré sur le trajet des faisceaux convergents réfléchis par le miroir, en aval du correcteur d'ouverture par rapport à ce miroir.

3. Architecture optique de télescope, selon l'une des revendications 1 ou 2, la pupille (7) est placée sur la face avant du correcteur d'ouverture (6) qui reçoit le ou les faisceau(x) convergent(s) réfléchi(s) par le miroir.

4. Architecture optique de télescope, selon l'une des revendications 1 à 3, dans laquelle le correcteur d'ouverture (6) et le correcteur de champ (8) sont athermiques et sans puissance ou quasiment sans puissance.

5. Architecture optique de télescope, selon l'une des revendications 1 à 4, dans laquelle le correcteur d'ouverture (6) et/ou le correcteur de champ (8) sont respectivement constitués chacun de lentilles d'au moins deux types de verre différents.

6. Architecture optique de télescope, selon la revendication 5, dans laquelle le choix des indices des verres d'au moins un des correcteurs est exploité pour prendre en compte les variations occasionnées par la température.

7. Architecture optique de télescope, selon l'une des revendications 1 à 6, dans laquelle il est prévu un mécanisme de refocalisation agissant sur les lentilles du correcteur de champ.

8. Architecture optique de télescope, selon l'une des revendications 1 à 7, dans lequel il est prévu un auxiliaire intervenant au niveau du faisceau, tel qu'un éclateur spectral, à prismes dichroïques et divolis, permettant de le partager spectralement, un dérotateur d'image, ou une lame séparatrice permettant de diviser le faisceau pour obtenir des images dans des plans focaux différents.

## Claims

1. An optical architecture for observation telescopes, in particular for telescopes intended to be installed on board a vehicle, such as a space satellite, for observing terrestrial areas, the architecture including:
- a concave and off-axis mirror (5) which is aspherical or possibly spherical and reflects in the form of a convergent beam the beam consisting of radiation that it receives from a terrestrial area that it is observing,
- a dioptric and achromatic aperture correction plate (6) inserted on the path of the beam,
- a pupil (7) on the path of the beam to obtain an off-axis field of view preventing central obscuration, **characterized in that**:
- the aperture correction plate (6) is inserted on the path of the convergent beam reflected by the mirror,
- the pupil (7) is on the path of the reflected convergent beam, and **in that** the optical architecture also includes:
- a dioptric and achromatic field correction plate (8) inserted on the path of the convergent beam reflected by the mirror on the downstream side of the aperture correction plate relative to said mirror.

2. An optical architecture for observation telescopes, in particular for telescopes intended to be installed on board a space satellite for observing terrestrial areas, the architecture including:
- a concave and off-axis mirror (9) which is aspherical or possibly spherical and produces two images with a particular angular separation and which reflects as a convergent beam each of the two beams consisting of the radiation that it receives from a terrestrial area that it is observing,
- a dioptric and achromatic aperture correction plate (10) inserted on the path of the beams,
- a pupil (12) on the path of the beams to obtain two fields of view preventing central obscuration, said pupil being adapted to accommodate simultaneously two sighting directions each corresponding to one of the reflected beams, **characterized in that**
- the aperture correction plate (10) is inserted on the path of the convergent beams reflected by the mirror,
- the pupil (12) is on the path of the reflected convergent beams, and **in that** the optical architecture also includes:
- a dioptric and achromatic field correction plate (11) inserted on the path of the convergent beams reflected by the mirror on the downstream side of the aperture correction plate relative to said mirror.

3. A telescope optical architecture according to either claim 1 or claim 2 wherein the pupil (7) is on the front face of the aperture correction plate (6) which receives the convergent beam or beams reflected by the mirror.

4. A telescope optical architecture according to one of claims 1 to 3 wherein the aperture correction plate (6) and the field correction plate (8) are athermic and without power or virtually without power.

5. A telescope optical architecture according to any of claims 1 to 4 wherein the aperture correction plate (6) and/or the field correction plate (8) are each respectively made up of lenses of at least two different types of glass.

6. A telescope optical architecture according to claim 5 wherein the indices of the glasses of at least one of the correction plates are chosen to take into account variations caused by temperature.

7. A telescope optical architecture according to any of claims 1 to 6 including a focussing mechanism operating on the lenses of the field correction plate.

8. A telescope optical architecture according to any of claims 1 to 7 including an auxiliary operating on the beam, such as a beam splitter, with dichroic prisms and divolis, enabling the beam to be split spectrally, an image derotator, or a splitter plate for dividing the beam to obtain images in different focal planes.

## Patentansprüche

1. Optischer Aufbau eines Beobachtungsteleskops insbesondere für ein Teleskop, das an Bord eines Fahrzeuges, beispielsweise einem Raumsatellit, zu Zwecken der zonalen Erdbeobachtung installiert werden soll, wobei dieser Aufbau folgendes umfasst:
- einen asphärischen oder gegebenenfalls sphärischen, konkaven und außeraxialen Spiegel (5), der das Bündel der Strahlen, die er von einer beobachteten Erdzone empfängt, konvergierend reflektiert;
- eine dioptrische und achromatische Öffnungs-Korrektionsplatte (6), die im Gang des Bündels eingefügt ist;
- eine im Gang des Bündels angeordnete Pupille (7), sodass ein Sehfeld außerhalb der optischen Achse erzielt wird, wodurch das Vorhandensein eines Zentralverschlusses vermieden wird; **dadurch gekennzeichnet dass**:
- die Öffnungs-Korrektionsplatte (6) im Gang des von dem Spiegel reflektierten, konvergenten Bündels eingefügt ist;
- die Pupille (7) im Gang des reflektierten, konvergenten Bündels angeordnet ist, und dass der optische Aufbau ferner folgendes umfasst:
- eine dioptrische und achromatische Feld-Korrektionsplatte (8), die im Gang des von dem Spiegel reflektierten, konvergenten Bündels nach der Öffnungs-Korrektionsplatte in Bezug auf diesen Spiegel eingefügt ist.

2. Optischer Aufbau eines Beobachtungsteleskops insbesondere für ein Teleskop, das an Bord eines Raumsatelliten zu Zwecken der zonalen Erdbeobachtung installiert werden soll, wobei der Aufbau folgendes umfasst:
- einen asphärischen oder gegebenenfalls sphärischen, konkaven und außeraxialen Spiegel (9), mit dem zwei Bilder mit einer festgelegten Winkeltrennung aufgenommen werden können, und der jedes der beiden Bündel der Strahlen, die er von einer beobachteten Erdzone empfängt, konvergierend reflektiert;
- eine dioptrische und achromatische Öffnungs-Korrektionsplatte (10), die im Gang der Bündel eingefügt ist;
- eine im Gang der Bündel angeordnete Pupille (12), sodass unter Vermeidung eines Zentralverschlusses zwei Sehfelder erzielt werden, wobei diese Pupille so angeordnet ist, dass gleichzeitig die beiden Blickrichtungen, die jeweils einem der reflektierten Bündel entsprechen, hindurch gelassen werden; **dadurch gekennzeichnet, dass**:
- die Öffnungs-Korrektionsplatte (10) im Gang der von dem Spiegel reflektierten, konvergenten Bündel eingefügt ist;
- die Pupille (12) im Gang der reflektierten, konvergenten Bündel angeordnet ist, und dass der optische Aufbau ferner folgendes umfasst:
- eine dioptrische und achromatische Feld-Korrektionsplatte (11), die im Gang der von dem Spiegel reflektierten, konvergenten Bündel nach der Öffnungs-Korrektionsplatte in Bezug auf diesen Spiegel eingefügt ist.

3. Optischer Aufbau eines Teleskops gemäß einem der Ansprüche 1 oder 2, wobei die Pupille (7) an der Vorderseite der Öffnungs-Korrektionsplatte (6) angeordnet ist, die das bzw. die von dem Spiegel reflektierte(n), konvergente(n) Bündel empfängt.

4. Optischer Aufbau eines Teleskops gemäß einem der Ansprüche 1 bis 3, bei dem die Öffnungs-Korrektionsplatte (6) und die Feld-Korrektionsplatte (8) wärmeundurchlässig und ohne Brechkraft bzw. so gut wie ohne Brechkraft sind.

5. Optischer Aufbau eines Teleskops gemäß einem der Ansprüche 1 bis 4, bei dem die Öffnungs-Korrektionsplatte (6) und/oder die Feld-Korrektionsplatte (8) jeweils aus Linsen mit mindestens zwei verschiedenen Glastypen bestehen.

6. Optischer Aufbau eines Teleskops gemäß Anspruch 5, bei dem die Wahl der Brechzahlen der Gläser von mindestens einer der Korrektionsplatten dazu benutzt wird, die temperaturbedingten Veränderungen zu berücksichtigen.

7. Optischer Aufbau eines Teleskops gemäß einem der Ansprüche 1 bis 6, bei dem ein Refokussierungsmechanismus vorgesehen ist, der auf die Linsen der Feld-Korrektionsplatte einwirkt.

8. Optischer Aufbau eines Teleskops gemäß einem der Ansprüche 1 bis 7, bei dem ein auf das Bündel einwirkendes Hilfsmittel vorgesehen ist, wie zum Beispiel ein Sprektralgerät mit dichroitischen Prismen und Strahlenteilern, mit denen das Bündel spektral zerlegt werden kann, ein Bildderotator oder ein Strahlenteiler, mit dem das Bündel geteilt werden kann, um Bilder in verschiedenen Fokalebenen zu erhalten.
